# EUROPEAN PATENT SPECIFICATION

(11) **EP 4 190 919 B1**
(45) Date of publication and mention of the grant of the patent: **24.12.2025**
(21) Application number: 21850176.5
(22) Date of filing: 21.06.2021
(51) Int. Cl.: C21B 3/08, C02F 11/13, F26B 3/18, F26B 11/02, F26B 11/04, F26B 3/20

(54) **INTEGRATED DRYING PROCESS AND DEVICE FOR DRY GRANULATED SLAG AND SLUDGE**
INTEGRIERTES TROCKNUNGSVERFAHREN UND VORRICHTUNG FÜR TROCKENE GRANULIERTE SCHLACKE UND SCHLAMM
PROCÉDÉ ET DISPOSITIF DE SÉCHAGE INTÉGRÉ POUR SCORIES ET BOUES GRANULAIRES SÈCHES

(30) Priority: 31.07.2020 CN 202010758535
(43) Date of publication of application: 07.06.2023
(73) Proprietor: BAOSHAN IRON & STEEL CO., LTD., Shanghai 201900 (CN)
(72) Inventor: XIAO, Yongli, Shanghai 201900 (CN); LI, Yongqian, Shanghai 201900 (CN)
(74) Representative: Kuhnen & Wacker Patent- und Rechtsanwaltsbüro PartG mbB
(86) International application number: PCT/CN2021/101238
(87) International publication number: WO 2022/022161

(56) References cited:
- WO-A1-2020/063745
- CN-A- 101 387 472
- CN-A- 101 885 574
- CN-A- 108 165 686
- CN-A- 109 811 095
- CN-A- 110 330 211
- CN-A- 110 330 211
- JP-A- 2002 273 480
- US-A1- 2019 203 307

## Description

### Technical Field

The present invention relates to the technical field of recovery of residual heat from metallurgical molten slag, in particular to an integrated process for dry granulation of molten slag and drying of sludge, and an apparatus therefor.

### Background Art

China is now the largest steel producer in the world. China's steel output has remained ranking No. 1 in the world for 16 consecutive years, far ahead of other countries. In 2019, the steel output in the mainland of China was 996 million tons. The heat contained in the molten slag generated in the process of steelmaking is huge. From the perspective of energy saving, environmental protection and promoting the economic benefits of steel plants, it's quite necessary to recover heat from blast furnace slag and realize resource utilization of blast furnace slag. The temperature of blast furnace slag leaving the furnace is generally between 1400 and 1550 °C. The slag contains (1260-1880)×10³ kJ sensible heat/ton, equivalent to the calorific value of 60 kg standard coal. The production of 1 ton of pig iron is accompanied with 0.3 tons of blast furnace slag as a by-product, and the production of 1 ton of steel is accompanied with 0.13 tons of steel slag as a by-product. Based on 996 million tons of steel output, it may be calculated that at least 428 million tons of blast furnace slag and converter slag can be produced, of which the sensible heat is equivalent to 25.7 million tons of standard coal.

At present, the methods for treating blast furnace slag include dry slag pit cooling and water quenching. In the dry slag pit cooling method, molten blast furnace slag is poured into a dry slag pit for air cooling to solidify, followed by water cooling. This method causes pollution to underground water. A large quantity of water vapor is released during cooling, and a large quantity of H₂S and SO₂ gases are emitted at the same time, leading to corrosion of buildings, damage of equipment and deterioration of working environment. Generally, this method is only used for accident handling. 90% of the blast furnace slag in China is treated with the water quenching method, and the water granulated slag obtained is used to produce cement, slag brick, slag powder and heat insulation filler. There are many ways for water quenching of blast furnace slag, and the main treatment processes include: OCP, INBA, RASA, TYNA, MTC, etc. Although the water quenching process is constantly developing, the core of the technology is to quench blast furnace slag by spraying water, cool it, granulate it into water granulated slag, and then separate the water granulated slag from water. The quenching water is subjected to settling and filtration, and then recycled.

The water quenching method cannot fundamentally change the water-consuming characteristic of the slag granulation process. The physical heat of the slag is nearly lost entirely. The emission of SO₂, H₂S and other pollutants during the water quenching process not only affects the working environment, but also pollutes the air. The water quenching method has the following disadvantages:
1. The high-quality residual heat resource contained in the blast furnace slag is wasted. The liquid blast furnace slag having a temperature of 1350 °C - 1450 °C is discharged from a taphole, and it is crushed and cooled by high-pressure water. At such a high temperature, most of the liquid water is quickly gasified into water vapor which is discharged into the atmosphere, thereby wasting a lot of heat contained in this part of water vapor. From the perspective of energy utilization efficiency, the residual heat of liquid blast furnace slag is of very high quality, and has great utilization value.
2. A huge amount of water is wasted. In the process of water quenching, the water pressure is greater than 0.2 MPa, and the ratio of slag to water is 1:10. 0.8-1.2 tons of fresh water is consumed per ton of slag. Currently, China's output of blast furnace pig iron exceeds 680 million tons; the annual output of blast furnace slag is about 200 million tons; and the consumption of fresh water for quenching slag is about 200 million tons.
3. Harmful gases such as SO₂ and H₂S are produced and pollute the environment. A large amount of H₂S and SOₓ are produced during the water quenching process, and they are discharged into the atmosphere along with the water vapor. When they accumulate to a certain extent, they will induce acid rain.

In respect of recovery of residual heat from blast furnace slag, the use of the residual heat recovered during the water quenching is limited to heating with the residual heat of the quenching water, supplying hot water in bathrooms, etc. The recovery rate of the residual heat is low, only about 10%. Moreover, the use is limited by time and area. In summer and in districts without heating facilities, this part of energy can only be wasted. Thus, the popularization and application of this method are limited. At present, a hot subject in the development of technologies for recovering sensible heat from blast furnace slag is the dry recovery method. It is more water-saving and environmentally friendly than the existing water quenching method, and it is in line with the concept of sustainable development.

The earlier processes that achieved certain effects mainly include internal cooling rotating drum process, roller granulation process, air quenching process, mechanical stirring process, continuous casting and rolling process in Japan, and centrifugal spinning disc process in Britain. The current technologies have the following problems:
1. The granulation effect is not good, which is not conducive to further utilization of the resulting granulated slag. The cold slag obtained by the internal cooling rotating drum process is discharged in the form of flakes. This form is not conducive to further utilization of the slag. The particle diameter distribution of the granulated slag obtained by the air quenching process is wide, which is not conducive to subsequent treatment. The flat-plate-like slag obtained by the continuous casting and rolling process is in the form of large flakes, which is not conducive to further utilization of the slag.
2. The quality of the heat exchanged gas is not high. A fluidized bed is used in the centrifugal spinning disc process for heat exchange. The bed layer is back-mixed violently. The outlet temperature is not high, namely 400-500°C. The energy quality is low, and the high temperature heat source has not been effectively utilized.
3. The heat recovery efficiency is low. The internal heat medium used in the internal cooling rotating drum process absorbs about 40% of the sensible heat of the molten slag. The air permeability of the high temperature flat-plate-like slag obtained by the continuous casting and rolling process seriously affects the efficiency of heat exchange between the cold air and the water-cooling wall.
4. The vitrification degree is not high, and the added value is low. The roller granulation process is semi-quenching treatment, and the resulting product is concrete aggregate having low added value. The slag particles obtained by the mechanical stirring process have a large and nonuniform size, and the vitrification degree is not high, so they can only be used as a paving material.
5. The operation cost of the equipment is high, and the investment is large. The air quenching process consumes a lot of power during the granulation process, and the cooling speed of the air quenching process is relatively slow. In order to prevent the granulated slag from adhering to the surface of the equipment before it is consolidated, the equipment needs to have a large size, which increases the investment cost.

The technology currently used for water quenching metallurgical slag not only causes waste of high-quality residual heat contained in blast furnace slag, but also causes waste of a large volume of fresh water. At the same time, it causes very serious pollution to the environment. This method is far from being able to adapt to the development mode of new industrialization and circular economy, and must be fundamentally changed or discarded. On the other hand, the dry granulation processes for blast furnace slag are technically immature at present, some of which have low efficiency, some of which affect the performances of the slag and reduce its added value, some of which require large investment in equipment, etc. These problems cannot be solved effectively.

In recent years, there has been an obvious trend of growth in sludge production. At present, the total annual discharge of wastewater in China exceeds 400×10⁸ t; the annual discharge of dry sludge is about 5.50×10⁶-6.00×10⁶ t; and they continue to increase. One reason is that the population served by the sewage pipe network is increasing continuously, and the other reason is that the water discharge standards are more and more stringent.

Sludge is generally defined in China as a semi-solid or solid substance produced in the process of sewage treatment, and it's a complex heterogeneous body composed of organic matter, bacteria, inorganic particles, and colloids. If classified according to the source of sludge, there are mainly water supply sludge, industrial wastewater sludge and domestic sewage sludge. According to the sewage treatment process, sludge may be classified into the following categories: primary sludge, activated sludge, humic sludge, chemical sludge, etc. The moisture content of sludge mainly depends on the type of solids in the sludge and the particle size. Generally, the finer the solid particles, and the more organic matter the slag contains, then the higher the water content of the sludge. The moisture content or solid content of the sludge is closely related with the sludge volume. For example, when the moisture content of the sludge drops from 95% to 90%, the sludge volume will be reduced by half. Hence, reducing the moisture content of the sludge is of great significance.

A sludge drying technology is the premise and basis for implementing treatment and resource utilization of sludge. The traditional sludge drying technology has high energy cost. When the moisture content of sludge is decreased from 80% to 20%, the energy consumption for drying one ton of sludge exceeds 740 KWH of electricity, equivalent to about 90 kg of standard coal. This seriously restricts the development and application of the sludge drying technology.

The published patent applications US 2019/203307A1, CN 110 330 211 A, WO 2020/063745 A1 and CN 108 165 686 A disclose processes and devices for drying slag and sludge according to prior art.

### Summary

One object of the present invention is to provide an integrated process for dry granulation of molten slag and drying of sludge, and an apparatus for the same, wherein the residual heat of high temperature molten slag is used to dry sludge, so as to realize coordinated treatment including slag cooling, slag granulation and sludge drying. The two tough problems concerning high temperature molten slag cooling and sludge drying are thus addressed. Moreover, the recycling rate of the residual heat of high temperature molten slag is increased greatly.

To achieve the above object, the technical solution adopted in the present invention is as follows:
A method for molten slag cooling, granulation and sludge drying, comprising steps of:
1) Slag - ball mixing and soaking
   Mixing high temperature molten slag having a temperature of ≥1300 °C and steel balls at a weight ratio of 1:50-100 in a molten slag cooling treatment device, wherein the high temperature molten slag and steel balls are fully and evenly mixed and heat exchanged by tumbling the high temperature molten slag and steel balls, wherein the steel balls absorb heat from the high temperature molten slag, while the high temperature molten slag is gradually cooled and crushed by the steel balls to form granular slag having a particle diameter of ≤150 mm and a temperature of lower than 400 °C; wherein the steel balls having absorbed heat have a temperature of 200-400 °C;
2) Slag-ball separation
   Discharging the granular slag through a slag discharge mechanism, and discharging the steel balls having absorbed heat into a chute for high temperature steel ball have a temperature of 200-400 °C;
3) Sludge drying

Transporting the steel balls having absorbed heat to a sludge drying device through the chute for high temperature steel ball to mix with sludge infused into the sludge drying device, wherein the sludge drying device is driven by a driving device to rotate so that the sludge and steel balls in the sludge drying device tumble, and fully and evenly mix and exchange heat, whereby the sludge is dried by the steel balls having absorbed heat; wherein the steel balls and dried sludge are separated when a moisture content of the sludge reaches a set value; wherein the dried sludge is discharged through a dry sludge discharge device, and the steel balls cooled by the sludge are discharged through an outlet; wherein a mass ratio of the steel balls to the infused sludge is 2-10:1.

In some embodiments, the present invention provides an integrated process for dry granulation of molten slag and drying of sludge, comprising steps of:
1) Slag - ball mixing and soaking
   Transporting high temperature molten slag and steel balls respectively to a molten slag cooling treatment device, wherein the molten slag cooling treatment device is driven by a driving device to rotate so that the high temperature molten slag and steel balls in the molten slag cooling treatment device tumble, and fully and evenly mix and exchange heat, wherein the steel balls absorb heat from the high temperature molten slag, while the high temperature molten slag is gradually cooled and crushed by the steel balls to form granular slag having a particle diameter of ≤150 mm and a temperature of lower than 400 °C; wherein the granular slag and the steel balls are separated, wherein the granular slag is discharged through a slag discharge mechanism, and the steel balls having absorbed heat are discharged into a chute for high temperature steel ball; wherein a weight ratio of the high temperature molten slag to the steel balls is 1:50-100, and the steel balls having absorbed heat have a temperature of 200-400 °C;
2) Sludge drying

Transporting the steel balls having absorbed heat to a sludge drying device through the chute for high temperature steel ball to mix with sludge infused into the sludge drying device, wherein the sludge drying device is driven by a driving device to rotate so that the sludge and steel balls in the sludge drying device tumble, and fully and evenly mix and exchange heat, whereby the sludge is dried by the steel balls having absorbed heat; wherein the steel balls and dried sludge are separated when a moisture content of the sludge reaches a set value; wherein the dried sludge is discharged through a dry sludge discharge device, and the steel balls cooled by the sludge are discharged through an outlet; wherein a mass ratio of the steel balls to the infused sludge is 2-10:1.

Further, the cooled steel balls are transported and returned to the molten slag cooling treatment device, thereby forming a cyclic treatment process.

Preferably, an initial moisture content of the sludge is 30-95%, and a moisture content of the dried sludge is 3-10%.

Further, after the granular slag is discharged by the slag discharge mechanism, it is collected by a cold slag collection device and transferred to a cold slag bin below for subsequent resource treatment and utilization.

Further, the slag discharge mechanism is disposed at a tail of the molten slag cooling treatment device.

Further, the dried sludge is discharged through the dry sludge discharge device, collected by a dry sludge collector, and then sent to a dried sludge bin below for subsequent resource treatment and utilization.

According to the present invention, the size of the steel balls is not particularly limited as long as they can crush the high temperature molten slag to form granular slag having a particle diameter of ≤150 mm. An exemplary steel ball diameter may be 80 mm - 200 mm.

In the integrated method and process for dry granulation of molten slag and drying of sludge according to the present invention:
The high temperature molten slag enters the molten slag cooling treatment device through a molten slag feeding hopper, and the steel balls used as a molten slag cooling medium are transported from the molten slag feeding hopper to the molten slag feeding hopper, and mixed with the high temperature molten slag. The inner wall of the molten slag cooling treatment device is provided with a slag-ball propulsion mechanism (such as a spiral shoveling plate). As the molten slag cooling treatment device rotates, the steel balls and high temperature molten slag are mixed evenly, and the high temperature molten slag is gradually cooled and crushed by the steel balls. At the same time, heat is transferred from the high temperature molten slag to the steel balls. After the high temperature molten slag is cooled and crushed, granular slag having a particle diameter of ≤ 150 mm and a temperature of lower than 400 °C is formed. The cooled and solidified granular slag is discharged through the slag discharge mechanism at the tail of the molten slag cooling treatment device, collected by the cold slag collection device, and transferred to a cold slag bin below for subsequent resource treatment and utilization. The steel balls having absorbed heat continue to advance along with the rotation of the molten slag cooling treatment device, and are discharged to the chute for high temperature steel ball.

The temperature of the steel balls having absorbed heat is 200-400 °C. The steel balls are transported by the chute for high temperature steel ball to mix with the sludge transported by a sludge transporting device, and enter the sludge drying device. The inner wall of the sludge drying device is also provided with a sludge-ball propulsion mechanism (such as a spiral shoveling plate). Under the action of the sludge-ball propulsion mechanism (such as a spiral shoveling plate), the steel balls and sludge are transported forward while mixing and drying are implemented. When the sludge is dried to a set moisture content, it is discharged through the dry sludge discharge device at the tail of the sludge drying device, collected by the dry sludge collector, and then sent to the dried sludge bin below for subsequent resource treatment and utilization. The moisture content of the dried sludge may be set according to different requirements of users. The process parameters may be adjusted to achieve the required moisture content of the dried sludge. Generally, the initial moisture content of the sludge is 30-95% by weight, and the moisture content of the dried sludge can reach 3-10% by weight.

The steel balls discharged from the sludge drying device enter a chute for low temperature steel ball along which the steel balls are transported to a steel ball transporting device. Under the driving action of gravity and a pushing mechanism, the steel balls are discharged from an outlet of the steel ball transporting device, and enter the molten slag feeding hopper of the molten slag cooling treatment device. As such, the steel balls can move in cycles, and are used repeatedly.

The apparatus for the integrated process for dry granulation of molten slag and drying of sludge according to the present invention comprises:
a molten slag cooling treatment device having a cylinder structure, comprising: a propulsion mechanism provided on an inner wall thereof, a molten slag feeding hopper provided at an inlet thereof, and a slag discharge mechanism provided at an outlet thereof; wherein the molten slag cooling treatment device is provided with a first driving device configured to drive it to rotate;
a plurality of steel balls, a steel ball transporting device coupled to the inlet of the molten slag cooling treatment device, and a chute for high temperature steel ball, one end of which is coupled to the outlet of the molten slag cooling treatment device;
a sludge drying device having a cylinder structure, comprising: a propulsion mechanism provided on an inner wall thereof, a sludge transporting device provided at an inlet thereof, and a dry sludge discharge device provided at an outlet thereof, wherein the sludge drying device is coupled to a second driving device configured to drive it to rotate; wherein the inlet of the sludge drying device is coupled to the other end of the chute for high temperature steel ball, and a chute for low temperature steel ball, one end of which is coupled to the outlet of the sludge drying device, and the other end of which is coupled to a steel ball inlet of the steel ball transporting device, the temperature of the low temperature steel balls is 150 °C or lower, wherein the steel ball inlet of the steel ball transporting device is communicated with the outlet of the sludge drying device via the chute for low temperature steel ball, and a steel ball outlet of the steel ball transporting device is coupled to the molten slag feeding hopper of the molten slag cooling treatment device, such that the molten slag cooling treatment device, the steel ball transporting device, and the sludge drying device are arranged in an end-to-end triangular configuration.

In the present invention, the molten slag cooling treatment device is used to cool molten slag; and the sludge drying device is used to dry sludge. The chute for high temperature steel ball is used to receive the high temperature steel balls coming from the molten slag cooling treatment device and separated from the granular slag, so that they can be sent to the sludge drying device. The chute for low temperature steel ball is used to receive the steel balls coming from the sludge drying device and separated from the dried sludge, so that they can be sent to the steel ball transporting device.

Further, the steel ball inlet of the steel ball transporting device is communicated with the outlet of the sludge drying device via the chute for low temperature steel ball; a steel ball outlet of the steel ball transporting device is coupled to the molten slag feeding hopper of the molten slag cooling treatment device; and the molten slag cooling treatment device is communicated with the inlet of the sludge drying device via the chute for high temperature steel ball.

Preferably, the steel ball transporting device is disposed with its outlet end oriented obliquely upward at an inclination angle of 25°-80° relative to a horizontal plane.

Preferably, the steel ball transporting device has a cylinder structure and comprises a propulsion mechanism provided on an inner wall thereof, wherein the steel ball transporting device is coupled to a driving device configured to drive it to rotate.

Preferably, the molten slag cooling treatment device, the steel ball transporting device and the sludge drying device are arranged in such a manner that an acute angle is formed therebetween.

Preferably, the molten slag cooling treatment device is disposed horizontally, or disposed with its inlet end oriented obliquely downward at an inclination angle of 0°-45°, preferably 5°-15°.

Preferably, the sludge drying device is disposed horizontally, or disposed with its outlet end oriented obliquely downward at an inclination angle of 0°-15°.

Preferably, the slag discharge mechanism and the dry sludge discharge device are provided with a tail gas collection and discharge device.

Preferably, the first driving device and the second driving device each comprise a ring gear disposed on the molten slag cooling treatment device or the sludge drying device, and a driving gear meshed with the ring gear, wherein the driving gear is disposed on an output end of a reducer coupled to a motor.

Preferably, the third driving device comprises a ring gear disposed on the steel ball transporting device, and a driving gear meshed with the ring gear, wherein the driving gear is disposed on an output end of a reducer coupled to a motor.

Preferably, the propulsion mechanism is a spiral shoveling plate.

In the design of the apparatus for the integrated process for dry granulation of molten slag and drying of sludge according to the present invention:
By the arrangement of the molten slag cooling treatment device, sludge drying device and steel ball transporting device according to the present invention, not only rapid granulation of high temperature molten slag and recovery of residual heat are realized, but drying of sludge is also realized; not only the challenge of effective utilization of the residual heat of a huge amount of molten slag in the iron and steel industry is addressed, but broad prospects are also opened up for the treatment and resource utilization of urban sludge. Moreover, as a preferred design, the three devices can be connected end to end and arranged in a triangular configuration to form a cyclic treatment system, so that the whole apparatus is more compact and more efficient.

In the present invention, a tail gas collection and discharge device is further provided on the slag discharge mechanism to collect the dust generated during the cooling and crushing of the high temperature molten slag, and then discharge the tail gas after subsequent treatment by a corresponding tail gas purification device to meet the standards. A tail gas collection and discharge device is provided on the dry sludge discharge device to collect the tail gas containing dust and water vapor generated in the sludge drying process, and then discharge the tail gas after subsequent treatment by a corresponding tail gas purification device to meet the standards, thereby realizing environmentally friendly treatment.

The molten slag cooling treatment device, sludge drying device and steel ball transporting device each are provided with supporting devices at both ends. The supporting device comprises supporting mechanisms including a supporting ring and a supporting wheel. The inclination angle between each device and the horizontal plane can be adjusted by adjusting the supporting device.

In the present invention, the temperature of the high temperature molten slag is generally ≥1300 °C, for example, 1350 °C-1500 °C. After sufficient heat exchange with the sludge, the temperature of the high temperature steel balls usually drops to 150 °C or lower (that is, the temperature of the low temperature steel balls described herein).

The beneficial effects of the present invention include:
1. Molten slag cooling and sludge drying are implemented in coordination.
   According to the present invention, the two different technical fields and industries of molten slag treatment and sludge drying are linked organically. Not only the molten slag is cooled and granulated effectively, but the residual heat is also recovered and used efficiently. The residual heat recovered from the molten slag is used to achieve low-cost drying of sludge. This not only solves the tough problem of effective utilization of the residual heat of a huge amount of molten slag in the iron and steel industry, but also opens up broad prospects for the treatment and resource utilization of urban sludge. The two tough problems concerning molten slag cooling and sludge drying are solved at the same time.
2. The overall process according to the present invention is fast, stable and continuous.
   In the present invention, steel balls are used as an efficient cooling medium and a heat retainer to continuously recover heat from the molten slag and transfer the heat to the low temperature sludge. Furthermore, the steel balls can be used repeatedly due to cyclic transfer, so that the molten slag and sludge can be treated stably and continuously.
3. The molten slag is treated with high efficiency.
   The molten slag is cooled and granulated continuously and dynamically. This overcomes the shortcomings of long-term static cooling and slow heat exchange in conventional processes. The treatment efficiency of the molten slag is improved greatly.
4. The utilization rate of the heat energy of the molten slag is high.
   The temperature of the molten slag is high, and the quality of the heat energy carried by the molten slag is high. However, similar to refractory materials, the molten slag has a very small thermal conductivity and releases heat slowly. The heat energy carried thereby is difficult to recover and utilize through conventional processes. Because the thermal conductivity of steel is relatively large, it can absorb and release heat quickly. Thus, when steel balls are used as a heat transfer medium, they can absorb the heat of the molten slag quickly and become high temperature steel balls during contact and mixing of the steel balls with the molten slag. When the high temperature steel balls are mixed with the sludge, they can release the heat therein quickly and transfer the heat to the sludge to achieve drying of the sludge.
5. The sludge is dried with high efficiency.
   In the present invention, the steel balls which have absorbed heat are in direct contact with the sludge, and stirred repeatedly, so that the heat exchange area is large, and the drying efficiency is high.
6. There are many varieties and wide ranges of dried sludge.

In the present invention, the steel balls which have absorbed heat are used to dry the sludge. As a heat transfer medium, the steel balls have a clean surface. The molten slag and the sludge do not contact each other, and thus the molten slag and the sludge do not contaminate each other. Therefore, the sludge drying is not restricted by the type of molten slag or the type of sludge. Blast furnace slag, converter slag and other slag can all provide heat, and inorganic sludge and organic sludge can both be dried.

### Description of the Drawings

Fig. 1 is a schematic view illustrating the structure of an apparatus for integrated dry granulation of molten slag and drying of sludge according to the present invention.
Fig. 2 is a view in direction A in Fig. 1.
Fig. 3 is a view in direction B in Fig. 1.
Fig. 4 is a view in direction C in Fig. 1.

Reference numbers include: 1, molten slag cooling treatment device; 2, steel ball; 3, steel ball transporting device; 4, chute for high temperature steel ball; 5, sludge drying device; 6, chute for low temperature steel ball; 7, steel ball chute; 8, tail gas collection and discharge device; 9, supporting device; 11, 31, 51, propulsion mechanism; 12, molten slag feeding hopper; 13, slag discharge mechanism; 14, first driving device; 16, cold slag collection device; 17, cold slag bin; 18, dry sludge collector; 19, dried sludge bin; 52, sludge transporting device; 53, dry sludge discharge device; 54, second driving device; 32, third driving device; 100, high temperature slag; 200, sludge.

### Detailed Description

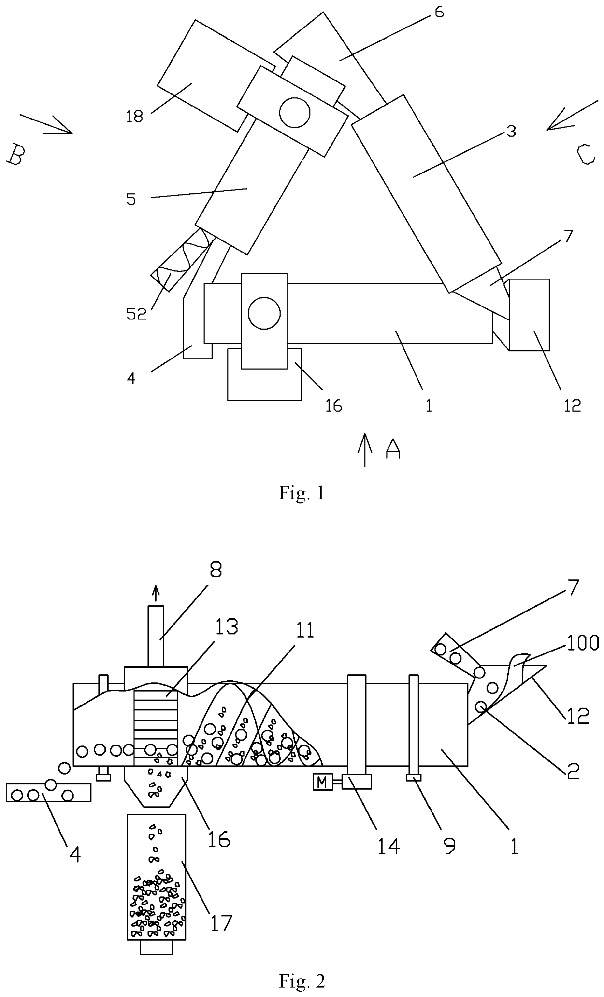

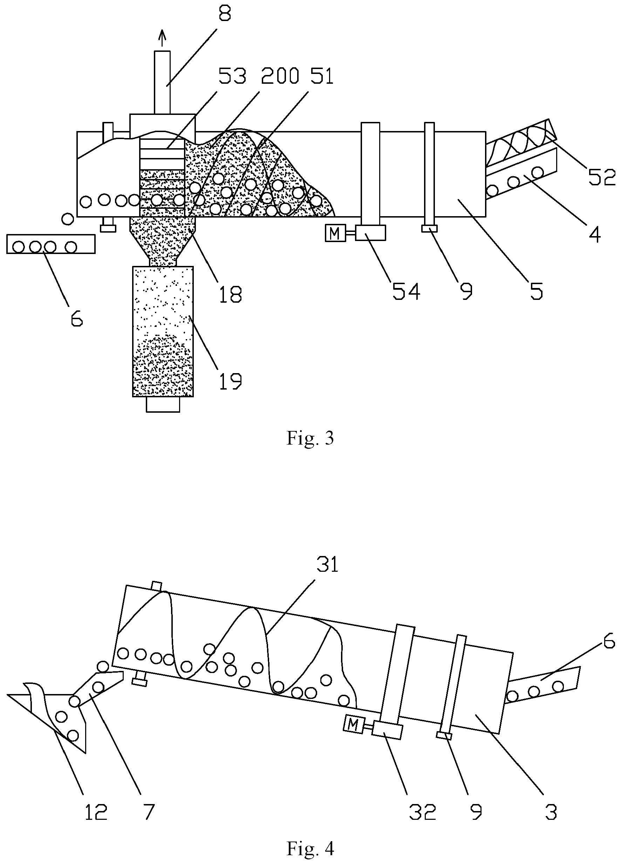

Referring to Figs. 1-4, the apparatus for integrated dry granulation of molten slag and drying of sludge according to the present invention comprises:
A molten slag cooling treatment device 1 having a cylinder structure, comprising: a propulsion mechanism 11 provided on an inner wall thereof, a molten slag feeding hopper 12 provided at an inlet thereof, and a slag discharge mechanism 13 provided at an outlet thereof; wherein the molten slag cooling treatment device 1 is provided with a first driving device 14 configured to drive it to rotate;
A plurality of steel balls 2, and a steel ball transporting device 3 coupled to the inlet of the molten slag cooling treatment device 1;
A chute 4 for high temperature steel ball, one end of which is coupled to the outlet of the molten slag cooling treatment device 1;
A sludge drying device 5 having a cylinder structure, comprising: a propulsion mechanism 51 provided on an inner wall thereof, a sludge transporting device 52 provided at a sludge inlet, and a dry sludge discharge device 53 provided at an outlet, wherein the sludge drying device 5 is coupled to a second driving device 54 configured to drive it to rotate; wherein the inlet of the sludge drying device 5 is coupled to the other end of the chute 4 for high temperature steel ball.

Further, a steel ball inlet of the steel ball transporting device 3 is communicated with the outlet of the sludge drying device 5 via a chute 6 for low temperature steel ball, and a steel ball outlet of the steel ball transporting device 3 is coupled to the molten slag feeding hopper 12 of the molten slag cooling treatment device 1 via a steel ball chute 7, such that the molten slag cooling treatment device 1, the steel ball transporting device 3, and the sludge drying device 5 are arranged in an end-to-end triangular configuration.

Preferably, the steel ball transporting device 3 is disposed with its outlet end oriented obliquely upward at an inclination angle of 25°-80° relative to a horizontal plane.

Preferably, the steel ball transporting device 3 has a cylinder structure and comprises a propulsion mechanism 31 provided on an inner wall thereof, wherein the steel ball transporting device 3 is coupled to a third driving device 32 configured to drive it to rotate.

Preferably, the molten slag cooling treatment device 1 is disposed with its inlet end oriented obliquely downward at an inclination angle of 0°-45°, preferably 5°-15° relative to a horizontal plane.

Preferably, the sludge drying device 5 is disposed horizontally, or disposed with its outlet end oriented obliquely downward at an inclination angle of 0°-15° relative to a horizontal plane.

Preferably, the slag discharge mechanism 13 and the dry sludge discharge device 53 are provided with a tail gas collection and discharge device 8.

Preferably, the first driving device 14 and the second driving device 54 each comprise a ring gear disposed on the molten slag cooling treatment device or the sludge drying device, and a driving gear meshed with the ring gear, wherein the driving gear is disposed on an output end of a reducer coupled to a motor.

Preferably, the third driving device 32 comprises a ring gear disposed on the steel ball transporting device, and a driving gear meshed with the ring gear, wherein the driving gear is disposed on an output end of a reducer coupled to a motor.

Preferably, the propulsion mechanisms 11, 51, 31 each are a spiral shoveling plate.

Preferably, the molten slag cooling treatment device 1, the sludge drying device 5 and the steel ball transporting device 3 each are provided with supporting devices 9 at both ends.

Preferably, the slag discharge mechanism 13 is coupled to a cold slag collection device 16, and a cold slag bin 17 is provided below the cold slag collection device 16.

Preferably, the dry sludge discharge device 53 is coupled to a dry sludge collector 18, and a dried sludge bin 19 is provided below the dry sludge collector 18.

The integrated process for dry granulation of slag and drying of sludge according to the present invention comprises:
1) Slag - ball mixing and soaking
   High temperature molten slag 100 and a plurality of steel balls 2 are first sent to a rotating molten slag cooling treatment device 1 through a slag feeding hopper 12 to fulfil slag-ball mixing. The high temperature molten slag 100 is gradually cooled and crushed by the steel balls 2, and transfers its heat to the steel balls 2. The high temperature molten slag 100 is gradually cooled and crushed by the steel balls to form granular slag having a particle diameter of ≤ 150 mm and a temperature of lower than 400 °C. The granular slag is discharged through a slag discharge mechanism 13 at the tail of the molten slag cooling treatment device 1, collected by a cold slag collection device 16, and transferred to a cold slag bin 17 below for subsequent resource treatment and utilization. The high temperature steel balls 2 having absorbed heat continue to advance as the molten slag cooling treatment device 1 rotates, and are discharged to a chute 4 for high temperature steel ball. The weight ratio of the high temperature molten slag to the steel balls is 1:50-100, and the temperature of the steel balls having absorbed heat is 200-400 °C.
2) Sludge drying

The high temperature steel balls 2 are transported to the sludge drying device 5 through the chute 4 for high temperature steel ball, and mixed at the inlet with the sludge 200 infused through a sludge transporting device 52. The mass ratio of the steel balls to the infused sludge is 2-10:1. The sludge drying device 5 rotates under the drive of a second driving device 54, so that the sludge 200 and the steel balls 2 in it tumble, and fully and evenly mix and exchange heat. The sludge 200 is dried by the high temperature steel balls 2. When the moisture content of the sludge 200 reaches a set value, the steel balls 2 are separated from the sludge 200. The sludge 200 is discharged through a dry sludge discharge device 53, collected by a dry sludge collector 18, and sent to a dried sludge bin 19 below for subsequent resource treatment and utilization. The cooled steel balls 2 are discharged through the outlet.

Further, the steel balls 2 discharged from the sludge drying device 5 enter a chute 6 for low temperature steel ball along which the steel balls are transported to a steel ball transporting device 3. Under the driving action of gravity and a pushing mechanism 31, the steel balls 2 are discharged from an outlet of the steel ball transporting device 3, and enter the molten slag feeding hopper 12 of the slag cooling treatment device 1, forming a cyclic treatment process.

The process control parameters in the Examples of the present invention are listed in Table 1 in detail.

**Table 1**

| No. | Weight ratio of high temperature molten slag to steel balls | Molten slag temperature °C | Granular slag particle diameter mm | Granular slag temperature °C | Temperature of steel balls having absorbed heat °C | Weight ratio of steel balls to infused sludge | Initial moisture content of sludge % | Moisture content of dried sludge % |
|---|---|---|---|---|---|---|---|---|
| Ex. 1 | 1:50 | 1500 | 150 | 385 | 365 | 2:1 | 30 | 5.8 |
| Ex. 2 | 1:60 | 1500 | 120 | 378 | 350 | 2:1 | 48 | 8.5 |
| Ex. 3 | 1:70 | 1450 | 100 | 350 | 335 | 6:1 | 45 | 3.5 |
| Ex. 4 | 1:75 | 1450 | 80 | 353 | 337 | 3:1 | 75 | 6.6 |
| Ex. 5 | 1:80 | 1500 | 50 | 367 | 343 | 7:1 | 75 | 5.2 |
| Ex. 6 | 1:85 | 1450 | 70 | 345 | 321 | 4:1 | 82 | 7.5 |
| Ex. 7 | 1:90 | 1400 | 90 | 335 | 306 | 6:1 | 82 | 7.3 |
| Ex. 8 | 1:100 | 1350 | 80 | 305 | 268 | 8:1 | 95 | 4.8 |

## Claims

1. A method for molten slag cooling, granulation and sludge drying, comprising steps of:
1) Slag - ball mixing and soaking
Mixing high temperature molten slag (100) having a temperature of ≥1300 °C and steel balls (2) at a weight ratio of 1:50-100 in a molten slag cooling treatment device (1), wherein the high temperature molten slag (100) and steel balls (2) are fully and evenly mixed and heat exchanged by tumbling the high temperature molten slag (100) and steel balls (2), wherein the steel balls (2) absorb heat from the high temperature molten slag (100), while the high temperature molten slag (100) is gradually cooled and crushed by the steel balls (2) to form granular slag having a particle diameter of ≤150 mm and a temperature of lower than 400 °C; wherein the steel balls (2) having absorbed heat have a temperature of 200-400 °C;
2) Slag-ball separation
Discharging the granular slag through a slag discharge mechanism (13), and discharging the steel balls (2) having absorbed heat into a chute (4) for high temperature steel ball have a temperature of 200-400 °C;
3) Sludge drying
Transporting the steel balls (2) having absorbed heat to a sludge drying device (5) through the chute (4) for high temperature steel ball to mix with sludge (200) infused into the sludge drying device (5), wherein the sludge drying device (5) is driven by a driving device to rotate so that the sludge (200) and steel balls (2) in the sludge drying device (5) tumble, and fully and evenly mix and exchange heat, whereby the sludge (200) is dried by the steel balls (2) having absorbed heat; wherein the steel balls (2) and dried sludge are separated when a moisture content of the sludge (200) reaches a set value; wherein the dried sludge is discharged through a dry sludge discharge device (53), and the cooled steel balls (2) are discharged through an outlet; wherein a mass ratio of the steel balls (2) to the infused sludge is 2-10:1.

2. The method of claim 1, wherein the cooled steel balls (2) are transported and returned to the molten slag cooling treatment device (1), thereby forming a cyclic treatment process.

3. The method of claim 1, wherein an initial moisture content of the sludge (200) is 30-95%, and a moisture content of the dried sludge is 3-10%.

4. An apparatus for the method of any one of claims 1-3, comprising
a molten slag cooling treatment device (1) having a cylinder structure, comprising: a propulsion mechanism (11, 51, 31) provided on an inner wall thereof, a molten slag feeding hopper (12) provided at an inlet thereof, and a slag discharge mechanism (13) provided at an outlet thereof; wherein the molten slag cooling treatment device (1) is provided with a first driving device (14) configured to drive it to rotate;
a plurality of steel balls (2), and a steel ball transporting device (3) coupled to the inlet of the molten slag cooling treatment device (1);
a chute (4) for high temperature steel ball, one end of which is coupled to the outlet of the molten slag cooling treatment device (1);
a sludge drying device (5) having a cylinder structure, comprising: a propulsion mechanism (11, 51, 31) provided on an inner wall thereof, a sludge transporting device (52) provided at an inlet thereof, and a dry sludge discharge device (53) provided at an outlet thereof, wherein the sludge drying device (5) is provided with a second driving device (54) configured to drive it to rotate; wherein the inlet of the sludge drying device (5) is coupled to the other end of the chute (4) for high temperature steel ball; and
a chute (6) for low temperature steel ball, one end of which is coupled to the outlet of the sludge drying device (5), and the other end of which is coupled to a steel ball inlet of the steel ball transporting device (3), the temperature of the low temperature steel balls (2) is 150 °C or lower;
wherein the steel ball inlet of the steel ball transporting device (3) is communicated with the outlet of the sludge drying device (5) via the chute (6) for low temperature steel ball, and a steel ball outlet of the steel ball transporting device (3) is coupled to the molten slag feeding hopper (12) of the molten slag cooling treatment device (1), such that the molten slag cooling treatment device (1), the steel ball transporting device (3), and the sludge drying device (5) are arranged in an end-to-end triangular configuration.

5. The apparatus of claim 4, wherein the steel ball transporting device (3) is disposed with its outlet end oriented obliquely upward at an inclination angle of 25°-80°.

6. The apparatus of claim 4 or claim 5, wherein the steel ball transporting device (3) has a cylinder structure and comprises a propulsion mechanism (11, 51, 31) provided on an inner wall thereof, wherein the steel ball transporting device (3) is provided with a third driving device (32) configured to drive it to rotate.

7. The apparatus of claim 4, wherein the molten slag cooling treatment device (1), the steel ball transporting device (3) and the sludge drying device (5) are arranged in such a manner that an acute angle is formed therebetween.

8. The apparatus of claim 4, wherein the molten slag cooling treatment device (1) is disposed horizontally, or disposed with its inlet end oriented obliquely downward at an inclination angle of 0°-45°, preferably 5°-15°.

9. The apparatus of claim 4, wherein the sludge drying device (5) is disposed horizontally, or disposed with its outlet end oriented obliquely downward at an inclination angle of 0°-15°.

10. The apparatus of claim 4, wherein the slag discharge mechanism (13) and the dry sludge discharge device (53) are provided with a tail gas collection and discharge device (8).

11. The apparatus of claim 4, wherein the first driving device (14) and the second driving device (54) each comprise a ring gear disposed on the molten slag cooling treatment device (1) or the sludge drying device (5), and a driving gear meshed with the ring gear, wherein the driving gear is disposed on an output end of a reducer coupled to a motor.

12. The apparatus of claim 6, wherein the third driving device (32) comprises a ring gear disposed on the steel ball transporting device (3), and a driving gear meshed with the ring gear, wherein the driving gear is disposed on an output end of a reducer coupled to a motor.

13. The apparatus of claim 4 or 6, wherein the propulsion mechanism (11, 51, 31) is a spiral shoveling plate.

## Patentansprüche

1. Verfahren zum Kühlen, Granulieren von geschmolzener Schlacke und Trocknen von Schlamm, wobei das Verfahren folgenden Schritte beinhaltet:
1) Vermengen und Einweichen von Schlacke und Kugeln
Vermengen von hochtemperierter geschmolzener Schlacke (100) mit einer Temperatur von ≥1300 °C und Stahlkugeln (2) in einem Gewichtsverhältnis von 1:50-100 in einer Behandlungsvorrichtung (1) zur Kühlung geschmolzener Schlacke, wobei die hochtemperierte geschmolzene Schlacke (100) und die Stahlkugeln (2) vollständig und gleichmäßig vermengt und durch Umherwirbeln der hochtemperierten geschmolzenen Schlacke (100) und der Stahlkugeln (2) einem Wärmeaustausch unterzogen werden, wobei die Stahlkugeln (2) Wärme von der hochtemperierten geschmolzenen Schlacke (100) aufnehmen, während die hochtemperierte geschmolzene Schlacke (100) allmählich abgekühlt und durch die Stahlkugeln (2) zerkleinert wird, um eine körnige Schlacke mit einem Partikeldurchmesser von ≤ 150 mm und einer Temperatur von weniger als 400 °C zu bilden; wobei die Stahlkugeln (2), die Wärme aufgenommen haben, eine Temperatur von 200-400 °C aufweisen;
2) Trennung von Schlacke und Kugeln
Austragen der körnigen Schlacke durch einen Schlackeaustragmechanismus (13) und Austragen der die Wärme aufgenommenen Stahlkugeln (2) in eine Rutsche (4) für hochtemperierte Stahlkugeln mit einer Temperatur von 200-400 °C;
3) Trocknung des Schlamms
Transportieren der die Wärme aufgenommenen Stahlkugeln (2) über die Rutsche (4) in eine Schlammtrocknungsvorrichtung (5), so dass die hochtemperierte Stahlkugeln sich mit einem in die Schlammtrocknungsvorrichtung (5) eingebrachten Schlamm vermengen, wobei die Schlammtrocknungsvorrichtung (5) durch eine Antriebsvorrichtung angetrieben wird, um sich so zu drehen, dass der Schlamm (200) und die Stahlkugeln (2) in der Schlammtrocknungsvorrichtung (5) umherwirbeln und sich vollständig und gleichmäßig vermengen und Wärme austauschen, wodurch der Schlamm (200) durch die die Wärme aufgenommenen Stahlkugeln (2) getrocknet wird; wobei die Stahlkugeln (2) und der getrocknete Schlamm getrennt werden, wenn der Feuchtigkeitsgehalt des Schlamms (200) einen festgelegten Wert erreicht; wobei der getrocknete Schlamm durch eine Trockenschlamm-Austragsvorrichtung (53) ausgetragen wird und die gekühlten Stahlkugeln (2) durch einen Auslass ausgetragen werden; wobei das Massenverhältnis der Stahlkugeln (2) zu dem eingebrachten Schlamm 2 -10:1 beträgt.

2. Verfahren nach Anspruch 1, wobei die gekühlten Stahlkugeln (2) transportiert und zu der Behandlungsvorrichtung (1) zur Kühlung geschmolzener Schlacke (1) zurückgeführt werden, wodurch ein zyklischer Behandlungsprozess entsteht.

3. Verfahren nach Anspruch 1, wobei ein anfänglicher Feuchtigkeitsgehalt des Schlamms (200) 30 bis 95 % beträgt und ein Feuchtigkeitsgehalt des getrockneten Schlamms 3 bis 10 % beträgt.

4. Vorrichtung für das Verfahren nach einem der Ansprüche 1 bis 3, wobei die Vorrichtung folgende Merkmale aufweist:
eine Behandlungsvorrichtung (1) zur Kühlung geschmolzener Schlacke mit einer Zylinderstruktur, aufweisend: einen Antriebsmechanismus (11, 51, 31), der an einer Innenwand derselben vorgesehen ist, einen Zuführtrichter (12) für geschmolzene Schlacke, der an einem Einlass derselben vorgesehen ist, und einen Schlackeaustragmechanismus (13), der an einem Auslass derselben vorgesehen ist;
wobei die Behandlungsvorrichtung (1) zum Kühlen geschmolzener Schlacke mit einer ersten Antriebsvorrichtung (14) versehen ist, die so konfiguriert ist, dass sie diese durch Antrieb in Drehung versetzt;
eine Vielzahl von Stahlkugeln (2) und eine Stahlkugeltransportvorrichtung (3), die mit dem Einlass der Behandlungsvorrichtung (1) zum Kühlen von geschmolzener Schlacke verbunden ist;
eine Rutsche (4) für hochtemperierte Stahlkugeln, deren eines Ende mit dem Auslass der Behandlungsvorrichtung (1) zum Kühlen von geschmolzener Schlacke verbunden ist;
eine Schlammtrocknungsvorrichtung (5) mit einer Zylinderstruktur, aufweisend: einen Antriebsmechanismus (11, 51, 31), der an einer Innenwand derselben vorgesehen ist, eine Schlammtransportvorrichtung (52), die an einem Einlass derselben vorgesehen ist, und eine Trockenschlamm-Austragvorrichtung (53), die an einem Auslass derselben vorgesehen ist, wobei die Schlammtrocknungsvorrichtung (5) mit einer zweiten Antriebsvorrichtung (54) versehen ist, die so konfiguriert ist, dass sie sie durch Antrieb in Drehung versetzt; wobei der Einlass der Schlammtrocknungsvorrichtung (5) mit dem anderen Ende der Rutsche (4) für hochtemperierte Stahlkugeln verbunden ist; und
eine Rutsche (6) für niedrig temperierte Stahlkugeln, deren eines Ende mit dem Auslass der Schlammtrocknungsvorrichtung (5) verbunden ist und dessen anderes Ende mit einem Stahlkugeleinlass der Stahlkugeltransportvorrichtung (3) verbunden ist, wobei die Temperatur der niedrig temperierten Stahlkugeln (2) 150 °C oder weniger beträgt; wobei der Stahlkugeleinlass der Stahlkugeltransportvorrichtung (3) über die Rutsche (6) für niedrig temperierte Stahlkugeln mit dem Auslass der Schlammtrocknungsvorrichtung (5) verbunden ist, und ein Stahlkugelauslass der Stahlkugeltransportvorrichtung (3) mit dem Zuführtrichter (12) für geschmolzene Schlacke der Behandlungsvorrichtung (1) zur Kühlung geschmolzener Schlacke verbunden ist, so dass die Kühlvorrichtung (1) für geschmolzene Schlacke, die Stahlkugeltransportvorrichtung (3) und die Schlammtrocknungsvorrichtung (5) Ende zu Ende in einer Dreieckskonfiguration angeordnet sind.

5. Vorrichtung nach Anspruch 4, wobei die Stahlkugeltransportvorrichtung (3) so angeordnet ist, dass ihr Auslassende in einem Neigungswinkel von 25° bis 80° schräg nach oben ausgerichtet ist.

6. Vorrichtung nach Anspruch 4 oder 5, wobei die Stahlkugeltransportvorrichtung (3) eine Zylinderstruktur aufweist und einen Antriebsmechanismus (11, 51, 31) umfasst, der an einer Innenwand derselben vorgesehen ist, wobei die Stahlkugeltransportvorrichtung (3) mit einer dritten Antriebsvorrichtung (32) versehen ist, die so konfiguriert ist, dass sie diese durch Antrieb in Drehung versetzt.

7. Vorrichtung nach Anspruch 4, wobei die Behandlungsvorrichtung zur Kühlung geschmolzener Schlacke (1), die Stahlkugeltransportvorrichtung (3) und die Schlammtrocknungsvorrichtung (5) so angeordnet sind, dass zwischen ihnen ein spitzer Winkel gebildet wird.

8. Vorrichtung nach Anspruch 4, wobei die Behandlungsvorrichtung (1) zur Kühlung geschmolzener Schlacke horizontal angeordnet ist oder mit ihrem Einlassende schräg nach unten in einem Neigungswinkel von 0° bis 45°, vorzugsweise 5° bis 15°, angeordnet ist.

9. Vorrichtung nach Anspruch 4, wobei die Schlammtrocknungsvorrichtung (5) horizontal angeordnet ist oder mit ihrem Auslassende in einem Neigungswinkel von 0° bis 15° schräg nach unten ausgerichtet ist.

10. Vorrichtung nach Anspruch 4, wobei der Schlackeaustragmechanismus (13) und die Trockenschlamm-Austragvorrichtung (53) mit einer Abgasauffang- und - abführvorrichtung (8) versehen sind.

11. Vorrichtung nach Anspruch 4, wobei die erste Antriebsvorrichtung (14) und die zweite Antriebsvorrichtung (54) jeweils ein auf der Behandlungsvorrichtung (1) zur Kühlung geschmolzener Schlacke oder der Schlammtrocknungsvorrichtung (5) angeordnetes Zahnkranzrad und ein mit dem Zahnkranzrad in Eingriff stehendes Antriebszahnrad umfassen, wobei das Antriebszahnrad an einem Abtriebsende eines mit einem Motor gekoppelten Untersetzungsgetriebes angeordnet ist.

12. Vorrichtung nach Anspruch 6, wobei die dritte Antriebsvorrichtung (32) einen auf der Stahlkugeltransportvorrichtung (3) angeordneten Zahnkranz und ein mit dem Zahnkranz in Eingriff stehendes Antriebszahnrad aufweist, wobei das Antriebszahnrad an einem Abtriebsende eines mit einem Motor gekoppelten Untersetzungsgetriebes angeordnet ist.

13. Vorrichtung nach Anspruch 4 oder 6, wobei der Antriebsmechanismus (11, 51, 31) eine spiralförmige Schaufelplatte ist.

## Revendications

1. Un procédé de refroidissement, de granulation et de séchage de boues de scories fondues, comprenant les étapes suivantes :
1) Mélange et trempage des scories et des billes
Mélanger des scories fondues à haute température (100) ayant une température ≥ 1300 °C et des billes d'acier (2) dans un rapport pondéral de 1:50 à 1:100 dans un dispositif de traitement de refroidissement des scories fondues (1), dans lequel les scories fondues à haute température (100) et les billes d'acier (2) sont mélangées de manière complète et homogène et échangent de la chaleur par culbutage des scories fondues à haute température (100) et des billes d'acier (2), les billes d'acier (2) absorbant la chaleur des scories fondues à haute température (100), tandis que les scories fondues à haute température (100) sont progressivement refroidies et broyées par les billes d'acier (2) pour former des scories granulaires ayant un diamètre de particule ≤ 150 mm et une température inférieure à 400 °C ; dans lequel les billes d'acier (2) ayant absorbé la chaleur ont une température de 200 à 400 °C ;
2) Séparation des scories et des billes
Décharger les scories granulaires à travers un mécanisme de décharge des scories (13) et décharger les billes d'acier (2) ayant absorbé la chaleur dans une goulotte (4) pour billes d'acier à haute température ayant une température de 200 à 400 °C ;
3) Séchage des boues
Transporter les billes d'acier (2) ayant absorbé de la chaleur vers un dispositif de séchage des boues (5) à travers la goulotte (4) pour billes d'acier à haute température afin de les mélanger avec les boues (200) introduites dans le dispositif de séchage des boues (5), dans lequel le dispositif de séchage des boues (5) est entraîné par un dispositif d'entraînement à tourner de telle sorte que les boues (200) et les billes d'acier (2) dans le dispositif de séchage des boues (5) culbutent, se mélangent complètement et uniformément et échangent de la chaleur, de sorte que les boues (200) sont séchées par les billes d'acier (2) ayant absorbé la chaleur ; dans lequel les billes d'acier (2) et les boues séchées sont séparées lorsque la teneur en humidité des boues (200) atteint une valeur définie ; dans lequel les boues séchées sont évacuées par un dispositif de décharge des boues sèches (53), et les billes d'acier refroidies (2) sont évacuées par une sortie ; dans lequel le rapport massique entre les billes d'acier (2) et les boues infusées est de 2 à 10:1.

2. Le procédé selon la revendication 1, dans lequel les billes d'acier refroidies (2) sont transportées et renvoyées vers le dispositif de traitement de refroidissement des scories fondues (1), formant ainsi un processus de traitement cyclique.

3. Le procédé selon la revendication 1, dans lequel la teneur en humidité initiale des boues (200) est de 30 à 95 %, et la teneur en humidité des boues séchées est de 3 à 10 %.

4. Un appareil pour le procédé selon l'une des revendications 1 à 3, comprenant
un dispositif de traitement de refroidissement des scories fondues (1) ayant une structure cylindrique, comprenant : un mécanisme de propulsion (11, 51, 31) prévu sur une paroi intérieure de celui-ci, une trémie d'alimentation en scories fondues (12) prévue à une entrée de celui-ci, et un mécanisme de décharge des scories (13) prévu à une sortie de celui-ci ; dans lequel le dispositif de traitement de refroidissement des scories fondues (1) est muni d'un premier dispositif d'entraînement (14) configuré pour l'entraîner en rotation ;
une pluralité de billes d'acier (2), et un dispositif de transport de billes d'acier (3) couplé à l'entrée du dispositif de traitement de refroidissement des scories fondues (1) ;
une goulotte (4) pour les billes d'acier à haute température, dont une extrémité est couplée à la sortie du dispositif de traitement de refroidissement des scories fondues (1) ;
un dispositif de séchage des boues (5) ayant une structure cylindrique, comprenant : un mécanisme de propulsion (11, 51, 31) prévu sur une paroi intérieure de celui-ci, un dispositif de transport des boues (52) prévu à une entrée de celui-ci, et un dispositif de décharge des boues sèches (53) prévu à une sortie de celui-ci, dans lequel le dispositif de séchage des boues (5) est muni d'un deuxième dispositif d'entraînement (54) configuré pour l'entraîner en rotation ; dans lequel l'entrée du dispositif de séchage des boues (5) est couplée à l'autre extrémité de la goulotte (4) pour les billes d'acier à haute température ; et
une goulotte (6) pour les billes d'acier à basse température, dont une extrémité est couplée à la sortie du dispositif de séchage des boues (5), et dont l'autre extrémité est couplée à une entrée de billes d'acier du dispositif de transport de billes d'acier (3), la température des billes d'acier à basse température (2) étant de 150 °C ou moins ; dans lequel l'entrée de billes d'acier du dispositif de transport de billes d'acier (3) communique avec la sortie du dispositif de séchage des boues (5) via la goulotte (6) pour billes d'acier à basse température, et une sortie de billes d'acier du dispositif de transport de billes d'acier (3) est couplée à la trémie d'alimentation en scories fondues (12) du dispositif de traitement de refroidissement des scories fondues (1), de telle sorte que le dispositif de traitement de refroidissement des scories fondues (1), le dispositif de transport de billes d'acier (3) et le dispositif de séchage des boues (5) sont disposés dans une configuration triangulaire de bout en bout.

5. L'appareil selon la revendication 4, dans lequel le dispositif de transport de billes d'acier (3) est disposé avec son extrémité de sortie orientée obliquement vers le haut selon un angle d'inclinaison de 25° à 80°.

6. L'appareil selon la revendication 4 ou la revendication 5, dans lequel le dispositif de transport de billes d'acier (3) a une structure cylindrique et comprend un mécanisme de propulsion (11, 51, 31) prévu sur une paroi intérieure de celui-ci, dans lequel le dispositif de transport de billes d'acier (3) est muni d'un troisième dispositif d'entraînement (32) configuré pour l'entraîner en rotation.

7. L'appareil selon la revendication 4, dans lequel le dispositif de traitement de refroidissement des scories fondues (1), le dispositif de transport de billes d'acier (3) et le dispositif de séchage des boues (5) sont disposés de manière à former un angle aigu entre eux.

8. L'appareil selon la revendication 4, dans lequel le dispositif de traitement de refroidissement des scories fondues (1) est disposé horizontalement, ou disposé avec son extrémité d'entrée orientée obliquement vers le bas selon un angle d'inclinaison de 0° à 45°, de préférence de 5° à 15°.

9. L'appareil selon la revendication 4, dans lequel le dispositif de séchage des boues (5) est disposé horizontalement, ou disposé avec son extrémité de sortie orientée obliquement vers le bas selon un angle d'inclinaison de 0° à 15°.

10. L'appareil selon la revendication 4, dans lequel le mécanisme de décharge des scories (13) et le dispositif de décharge des boues sèches (53) sont équipés d'un dispositif de collecte et de décharge des gaz résiduaires (8).

11. L'appareil selon la revendication 4, dans lequel le premier dispositif d'entraînement (14) et le deuxième dispositif d'entraînement (54) comprennent chacun une couronne dentée disposée sur le dispositif de traitement de refroidissement des scories fondues (1) ou le dispositif de séchage des boues (5), et un pignon d'entraînement engrené avec la couronne dentée, dans lequel le pignon d'entraînement est disposé sur une extrémité de sortie d'un réducteur couplé à un moteur.

12. L'appareil selon la revendication 6, dans lequel le troisième dispositif d'entraînement (32) comprend une couronne dentée disposée sur le dispositif de transport de billes d'acier (3) et un engrenage d'entraînement engrené avec la couronne dentée, dans lequel l'engrenage d'entraînement est disposé sur une extrémité de sortie d'un réducteur couplé à un moteur.

13. L'appareil selon la revendication 4 ou 6, dans lequel le mécanisme de propulsion (11, 51, 31) est une plaque de pelletage en spirale.
